# EUROPEAN PATENT APPLICATION

(11) **EP 4 228 152 A1**
(43) Date of publication of application: **16.08.2023**
(21) Application number: 21816115.6
(22) Date of filing: 21.10.2021
(51) Int. Cl.: H02S 40/10, H02S 20/32, F24S 30/45, F24S 30/455

(54) **SOLAR TOWER**

(71) Applicant: 3L Internacional, S.A., 39100 Sta. Cruz de Bezana (Cantabria) (ES)
(72) Inventor: LLERA MOLINA, Luis Enrique, 39100 Santa Cruz de Bezana (Cantabria) (ES)
(74) Representative: Pons
(86) International application number: PCT/ES2021/070766
(87) International publication number: WO 2023/067207

(57) **Abstract**

The invention relates to a photovoltaic structure with tower geometry that rests on a foundation and comprises a base, a support structure that is internally free and equipped with an elliptical cross section, capable of performing rotation and/or tilting movements depending on the incidence of the solar radiation, together with bifacial photovoltaic collectors incorporated around the support structure in order to collect incident solar radiation directly from the external portion of said photovoltaic structure and indirectly derived from the reflection and/or refraction from the internal portion of the support structure. Additionally, the photovoltaic structure incorporates automatic cleaning devices to clean the bifacial photovoltaic collectors.

## Description

### OBJECT OF THE INVENTION

The object of the invention falls within the renewable energy sector, specifically the sector of photovoltaic collector structures.

Specifically, the object of the invention is a solar tower with an elliptical geometric arrangement, which performs tilting and rotation movements with the help of a positioning mechanism; and with bifacial photovoltaic collectors arranged along the perimeter of said tower which collect the solar radiation both directly through the external face and indirectly through the internal face.

### BACKGROUND OF THE INVENTION

Photovoltaic solar energy is an energy source that produces electricity from renewable sources, obtained directly from solar radiation by means of a semiconductor device called a photovoltaic cell.

This type of energy is used mainly to produce electricity on a large scale through distribution networks, although it can additionally power countless autonomous applications and devices, as well as supply homes that are isolated from the electricity grid itself.

Photovoltaic cells are electronic devices that enable light energy to be transformed into electrical energy, by means of photoelectric effect, generating photovoltaic solar energy. As they are made of a material that has a photoelectric effect, they absorb light photons and emit electrons. When these electrons are collected, the result is an electric current that is used as electricity.

Additionally, solar structures are essential for equipping photovoltaic cells with the necessary inclination and orientation to take advantage of the maximum potential of the solar installation in which they are located. However, said structures must be adapted to the different types of surfaces, orientation and climatic conditions.

The arrangement of photovoltaic cells oriented or on flat terrain, extended horizontally with respect to the ground surface, as well as the location of photovoltaic cells vertically arranged in wind turbine towers or in lighting devices in the cities themselves, are known in the state of the art, in order to be self-sufficient from the solar energy collected.

Photovoltaic energy does not emit any type of pollution during the operation thereof, helping to prevent the emission of greenhouse gases. The main drawback thereof is that its production depends on solar radiation, so if a cell is not aligned perpendicular to the direction of the sun's rays, it can lose between 10 and 25 percent of the incident energy.

Another drawback of solar installations is that the production of electrical energy from solar radiation is affected by meteorological conditions such as gusts of wind, clouds that prevent the full incidence of radiation and dirt that is deposited on the solar panels, it being necessary to complement this type of energy with other additional energy sources.

Additionally, the horizontal arrangement of photovoltaic cell structures or also called solar trackers has drawbacks with respect to the space used and the exploitation of the terrain in which they are located, entailing high installation costs for the production of a certain amount of electrical energy.

### DESCRIPTION OF THE INVENTION

The photovoltaic structure with tower geometry object of the invention aims to solve the aforementioned problems by means of a preferably elliptical arrangement of bifacial photovoltaic collectors around an elongated support structure.

The invention comprises a base supported on a previously established foundation, a central core formed by a fixed rod that starts from said base, a movable rod wherein the support structure is fixed and with a rotation and tilting movement with respect to the fixed rod; and a positioning mechanism that relates both rods and facilitates the rotation and tilting of the movable rod with respect to the fixed rod.

Likewise, the support structure comprises a reticular framework, which extends wrapping the central core and with sections of essentially elliptical geometry, wherein a solar panel extended in height and assembled on said framework comprises a series of bifacial photovoltaic collectors with external and internal faces intended to collect the solar radiation that directly impinges on said external face and to collect the solar radiation that indirectly impinges from the reflection and/or refraction through the opposite collectors, respectively.

The base can function as a machine room and, in addition, it is equipped with control elements such as electrical signal inverters, transforming the direct output current of the photovoltaic collectors into single-phase or three-phase alternating current for use thereof. In turn, the base of the tower will have space to house blocks of lithium batteries to store energy and use it for the use of electric mobility, industrial uses, offices, warehouses, electric gas stations, electric vehicles, hotels and other multiple energy points.

The central core of the solar tower is preferably decentralised with respect to the centre of the elliptical arrangement of the framework sections to prevent the collision of the support structure with the central core during the tilting movement.

The movable rod tilts and rotates with respect to the longitudinal axis of the fixed rod with the help of a positioning mechanism, linked to the control elements of the base that transmits the commands to carry out said movements based on the incidence of the solar radiation, so that the reticular framework also tilts and rotates integrally with the aforementioned movable rod; and consequently the solar panel with the bifacial photovoltaic collectors.

This structural arrangement in the shape of a tower enables a minimum use of horizontal space to perform the same power generation function as conventional photovoltaic installations; and the elliptical arrangement.

Preferably, the elliptical configuration equips the solar tower structure with aerodynamics that offers minimum resistance to the action of the wind, favouring resistance to dynamic and static stresses of the elements that make up the subject invention. The sections of the reticular framework are preferably geometrically identical to each other.

The use of said solar tower can be applied to individual installations with the use of one or two structures object of the invention or in the construction of electricity generation farms, adapting the element for this purpose.

On the one hand, the positioning mechanism comprises a rotation mechanism that enables the movable rod to rotate with respect to the fixed rod and a tilting mechanism that enables said movable rod to tilt with respect to the fixed rod.

The rotation mechanism is made up of a first motor linked to the control elements of the base and connected to said elements through the inside of the fixed rod, which is hollow; and connected to an endless screw, causing said endless screw to rotate about its own longitudinal axis. The endless screw, in turn, engages with a toothed ring and transmits movement thereto, enabling said toothed ring to rotate with respect to the fixed rod.

Likewise, the tilting mechanism comprises a support plate fixed to the upper portion of the toothed ring, which rotates integrally with said toothed ring and is equipped with first fixing plates that support bushings wherein a shaft is inserted transversely. Said shaft is connected to a second motor that is also linked through the inside of the rod to the control elements of the base.

In turn, the shaft incorporates, by means of fixing elements, second fixing plates that are linked to the movable rod. The second motor transmits the commands received from the control elements so that the shaft rotates on itself and enables the movable rod to tilt with respect to the fixed rod.

Moreover, the support structure is equipped with supports that are attached to the movable rod by means of fixing elements and that link the reticular framework to the movable rod, which longitudinally wraps the rods of the solar tower and comprises curved plates facing each other and wherein the bifacial photovoltaic collectors are supported in addition to being responsible for equipping the support structure with that elliptical cross section.

The framework also comprises horizontal reinforcements and vertical reinforcements that attach said plates transversely and longitudinally, as well as cross reinforcements located between the vertical reinforcements which give rigidity to the attachment between the vertical reinforcements and the curved plates. Additionally, the support structure comprises vertical guides coupled facing each other in the reticular framework.

Apart from the aforementioned elements, the solar tower can incorporate external and internal automatic cleaning devices, moving the external cleaning device longitudinally along the guides of the support structure and comprising brushes that clean the external faces of the bifacial photovoltaic collectors.

The internal automatic cleaning device can be a series of hydraulic tubes arranged on the internal portion of the support structure with a series of injectors that eject a cleaning liquid to execute the command for cleaning the internal faces of the photovoltaic collectors.

The inside of the solar tower is as free as possible, the elements of the support structure being made of reflective material or being able to be coated or treated with a colour with properties that facilitate and enable greater reflection of the solar radiation so that it impinges with more energy on the internal faces of the solar collectors incorporated in the photovoltaic structure.

The radiation will impinge directly on the face of the solar tower that is most oriented to the south, the north face will be able to receive the radiation that has bounced off the ground or off some fixed element located behind the photovoltaic structure, for example, a building. The radiation in turn passes through the gaps in the solar collectors or gaps between solar collectors and is collected by the collectors that are located on the internal face.

The energy collected will be transformed into electrical energy through electronic elements such as electrical signal inverters, transforming the direct output current of the solar collectors into single-phase or three-phase alternating current for use thereof.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows a perspective view of the solar tower.
Figure 2 shows a detailed view of the positioning mechanism of the solar tower.
Figure 3 shows a perspective view of the support structure of the solar tower.
Figure 4 shows a perspective view of the coupling of the automatic cleaning installation in the solar tower.

### PREFERRED EMBODIMENT OF THE INVENTION

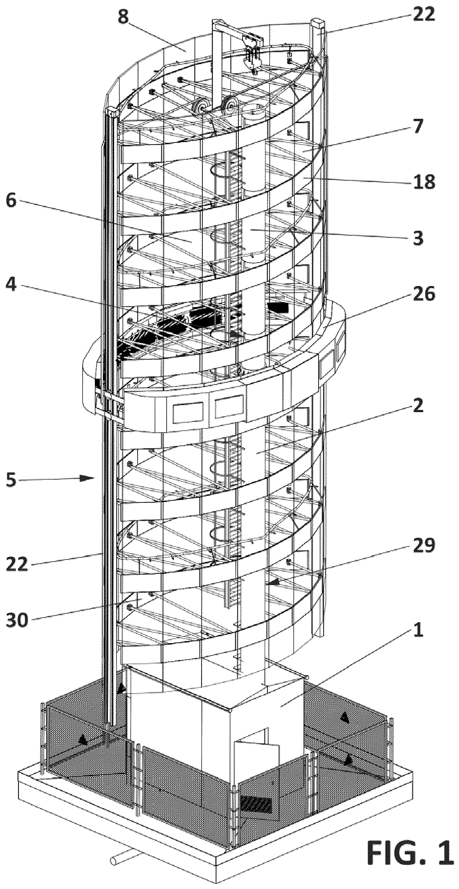

A preferred embodiment of the photovoltaic structure with tower geometry is described below with the aid of Figures 1 to 4.

Figure 1 shows a perspective view of the solar tower wherein it is observed that it comprises a base (1), an internal core (29) that starts at the top from the base (1), a support structure (5) that is elongated and is assembled around the internal core (29), equipped with a reticular framework (17) extended in height, in sections with an essentially elliptical configuration; and the solar tower further comprising a solar panel (30) extended and assembled on the reticular framework (17) and which is formed by bifacial photovoltaic collectors (6) arranged along the perimeter around the reticular framework (17).

Additionally, the bifacial photovoltaic collectors (6) comprise an external face (7) and an internal face (8), and said bifacial photovoltaic collectors (6) are intended to collect the solar radiation that impinges directly on the external face (7) and to collect the solar radiation reflected and/or refracted by the inside of the support structure (5) indirectly by the internal face (8).

In addition, with the help of Figure 1 it is observed how the internal core (29) additionally comprises a fixed rod (2) that starts vertically from the base (1), a movable rod (3) that rotates and tilts with respect to the fixed rod (2) and is linked to the reticular framework (17); and a positioning mechanism (4) located between the rods (2, 3) and which enables the tilting and rotation of the movable rod (3) with respect to the fixed rod (2).

It should be noted that said internal core (29) is decentralised with respect to the midpoint of the elliptical geometry with which the reticular framework (17) is equipped in order to enable the movable rod (3) to tilt with respect to the fixed rod (2) preventing possible collisions of the reticular framework (17) with the internal core (29).

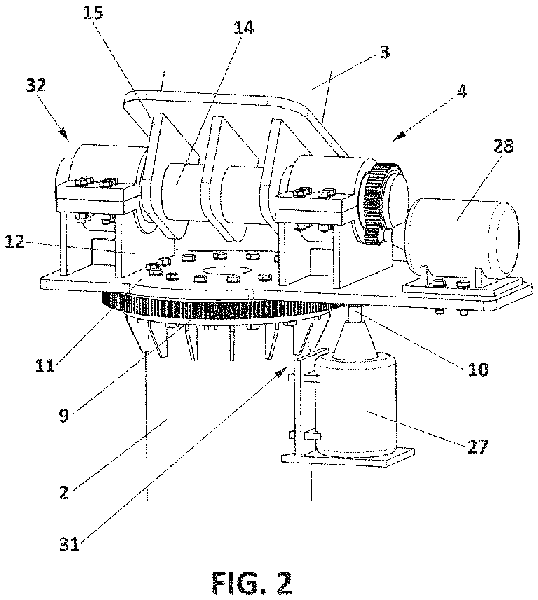

Figure 2 shows a detailed view of the positioning mechanism (4), which, in turn, is equipped with a rotation mechanism (31) and a tilting mechanism (32). On the one hand, the rotation mechanism (31) facilitates the rotational movement of the movable rod with respect to the fixed rod (2); and therefore, the rotational movement of the reticular framework (17) and consequently that of the solar panel (30) with respect to the fixed rod (2).

On the other hand, the tilting mechanism (32) facilitates the tilting movement of the movable rod (3) with respect to the fixed rod (2) and therefore the tilting movement of the solar panel (30) with respect to the fixed rod (2) and of the reticular framework (17).

The rotation mechanism (31) comprises a first motor (27), a toothed ring (9) that is rotatable with respect to the fixed rod (2) and an endless screw (10) connected to the first motor (27) and that engages with the toothed ring (9), transmitting the movement caused by the first motor (27) to said toothed ring (9).

At the same time, the tilting mechanism (32) comprises a support plate (11) fixed on the toothed ring (9) and which rotates integrally with the toothed ring (9) and comprises first fixing plates (12) and bushings (13) positioned on the first fixing plates (12), a rotating transversal cylinder (14) that is linked by means of second fixing plates (15) to the lower end of the movable rod (3) and assembled between the bushings (13) of the support plate (11), and a second motor (28) linked to the transversal cylinder (14) and causing the transversal cylinder (14) to rotate; and, therefore, the tilting movement of the movable rod (3) with respect to the fixed rod (2).

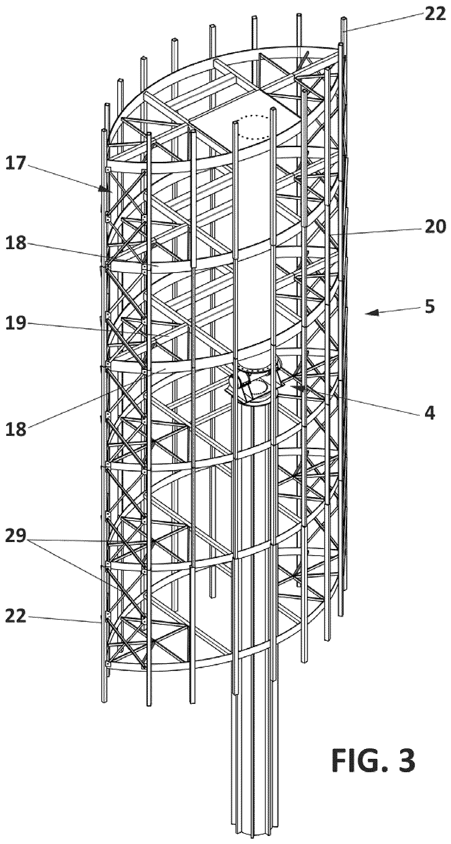

Figure 3 shows a perspective view of the support structure (5), wherein supports (16) are observed which link the reticular framework (17) to the movable rod (3) and wherein curved plates (18) are arranged in said reticular framework (17), in each of the sections thereof, facing each other and having a concave internal configuration which determine the configuration of the elliptical section. It should be noted that each of the sections of the reticular framework (17) are preferably geometrically and dimensionally identical.

The support structure (5) further comprises horizontal reinforcements (19) that transversely attach the curved plates (18), vertical reinforcements (20) that longitudinally attach the curved plates (18), and cross reinforcements (29) located between the vertical reinforcements (20) and which are intended to give rigidity to the attachment between vertical reinforcements (20) and the curved plates (18). Likewise, vertical guides (22) are incorporated into the support structure (5) and are assembled laterally between the curved plates (18) and facing the reticular framework (17).

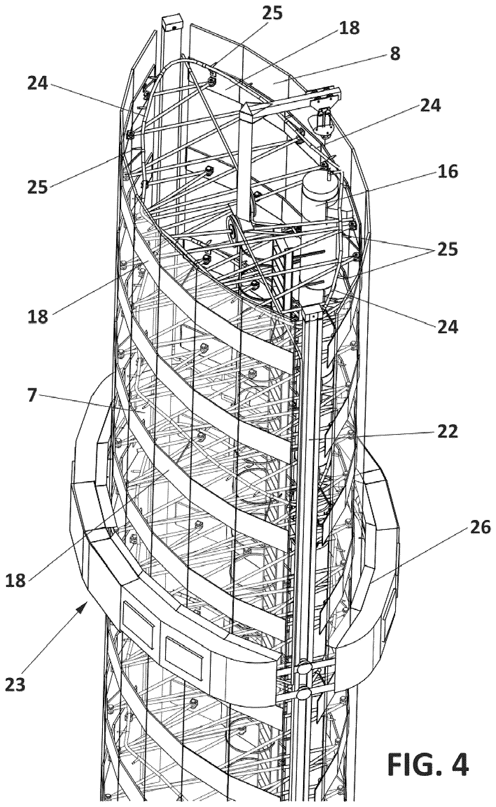

Finally, with the help of Figure 4, it is observed how the solar tower additionally comprises an external cleaning device (23) that moves longitudinally in height along the vertical guides (22) and that has curved brushes (26) that are in contact with the external face (7) of the bifacial photovoltaic collectors (4) for the cleaning thereof, as well as an internal cleaning device (24) extended internally along the support structure (5) with injectors (25) that eject a cleaning liquid for cleaning the internal face (8) of the bifacial photovoltaic collectors (6).

## Claims

1. A solar tower **characterised in that** it comprises:
- a base (1),
- an internal core (29) that starts at the top from the base (1),
- a support structure (5) elongated and assembled around the internal core (29), which is equipped with a reticular framework (17) extended in height in sections of an essentially elliptical configuration,
- a solar panel (30) extended in height and assembled on the reticular framework (17), said solar panel (30) formed by bifacial photovoltaic collectors (6) arranged along the perimeter around the reticular framework (17) and comprising an external face (7) and an internal face (8), said bifacial photovoltaic collectors (6) being intended to collect the solar radiation that impinges directly on the external face (7) and to collect the solar radiation reflected and/or refracted by the inside of the support structure (5) indirectly by the internal face (8).

2. The solar tower according to claim 1, wherein the internal core (29) comprises:
- a fixed rod (2) that starts vertically from the base (1) and is equipped with an upper end,
- a movable rod (3) linked to the reticular framework (17) of the support structure (5), which rotates and tilts with respect to the fixed rod (2) and is equipped with a lower end, and
- a positioning mechanism (4) located between the rods (2, 3).

3. The solar tower according to claim 2, the positioning mechanism (4) is equipped with:
- a rotation mechanism (31) that facilitates the rotational movement of the movable rod (3) with respect to the fixed rod (2) and therefore the rotational movement of the reticular framework (17); and consequently, the rotational movement of the solar panel (30) with respect to the fixed rod (2), and
- a tilting mechanism (32) that facilitates the tilting movement of the movable rod (3) with respect to the fixed rod (2) and therefore the tilting movement of the reticular framework (17); and consequently, the tilting movement of the solar panel (30) with respect to the fixed rod (2).

4. The solar tower according to claim 3, wherein the rotation mechanism (31) comprises:
- a first motor (27),
- a toothed ring (9) rotatable around the upper end of the fixed rod (2), and
- an endless screw (10) linked to the first motor (27) and engaging with the toothed ring (9), transmitting the movement caused by the first motor (27) to the toothed ring (9).

5. The solar tower according to claim 4, wherein the tilting mechanism (32) comprises:
- a support plate (11) fixed on the toothed ring (9) and which rotates integrally with the toothed ring (9) and comprising first fixing plates (12) and bushings (13) positioned on the first fixing plates (12),
- a rotating transversal cylinder (14) that is linked by means of second fixing plates (15) to the lower end of the movable rod (3) and assembled between the bushings (13) of the support plate (11), and
- a second motor (28) linked to the transversal cylinder (14) and causing the transversal cylinder (14) to rotate; and, therefore, the tilting movement of the movable rod (3) with respect to the fixed rod (2).

6. The solar tower according to claim 1, wherein the support structure (5) additionally comprises supports (16) that link the reticular framework (17) to the movable rod (3).

7. The solar tower according to claim 1, wherein the reticular framework (17) comprises in each of the sections thereof curved plates (18) facing each other with an internally concave configuration which determine the configuration of the essentially elliptical section.

8. The solar tower according to claim 7, wherein the support structure (5) comprises:
- horizontal reinforcements (19) that transversely attach the curved plates (18),
- vertical reinforcements (20) that longitudinally attach the curved plates (18), and
- cross reinforcements (29) located between the vertical reinforcements (20) and which are intended to give rigidity to the attachment between the vertical reinforcements (20) and the curved plates (18).

9. The solar tower according to claim 1, wherein the support structure (5) comprises vertical guides (22) assembled laterally between the curved plates (18) and facing the reticular framework (17).

10. The solar tower according to claim 9, additionally comprising an external cleaning device (23) that moves longitudinally in height along the vertical guides (22) and that has respective curved brushes (26) that are in contact with the external face (7) of the bifacial photovoltaic collectors (4) for the cleaning thereof.

11. The solar tower according to claim 1, comprising an internal cleaning device (24) that extends internally along said support structure (5) and that comprises injectors (25) intended to expel a cleaning liquid to clean the internal face (8) of the bifacial photovoltaic collectors (6).

12. The solar tower according to claim 1, wherein the sections with an elliptical configuration of the reticular framework (17) are dimensionally identical.

13. The solar tower according to claim 1, wherein the internal core (29) is offset from the centre of the elliptical configuration of the sections of the reticular framework (17) of the support structure (5).

14. The solar tower according to claim 1, wherein the first and second motors (27, 28) are connected by wiring to electrical and control elements linked to the base (1).

15. The solar tower according to claim 1, wherein the support structure (5) is made of a material with reflective properties to maximise sunlight collection by the bifacial photovoltaic collectors (6).

16. The solar tower according to claim 1, wherein the support structure (5) is painted with a paint that has reflective properties to maximise sunlight collection by the bifacial photovoltaic collectors (6).
